(19) Europäisches Patentamt
European Patent Office
Office européen des brevets

(11) **EP 2 497 795 A1**

(12) **EUROPEAN PATENT APPLICATION**

(43) Date of publication:
**12.09.2012 Bulletin 2012/37**

(51) Int Cl.:
**C08K 3/34** (2006.01)   **C08K 7/00** (2006.01)
**B22C 1/16** (2006.01)

(21) Application number: **12158797.6**

(22) Date of filing: **09.03.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.03.2011 KR 20110021110**

(71) Applicant: **Samsung Electronics Co., Ltd.**
**Suwon-si, Gyeonggi-do 442-742 (KR)**

(72) Inventors:
• **Kim, Kwang Hee**
 **Seoul (KR)**
• **Cho, Myung Dong**
 **Gyeonggi-do (KR)**
• **Park, Sang Ho**
 **Gyeonggi-do (KR)**
• **Hwang, Sung Woo**
 **Gyeonggi-do (KR)**

(74) Representative: **Zijlstra, Robert Wiebo Johan**
**Elkington and Fife LLP**
**Prospect House**
**8 Pembroke Road**
**Sevenoaks, Kent TN13 1XR (GB)**

(54) **Composition for clay-aerogel composite, clay-aerogel composite, and method of making the same**

(57)    A clay-aerogel composite including a plurality of clay flakes having a layered structure and an aerogel on a surface of the clay flakes, wherein the plurality of clay flakes are connected to each other to provide a three-dimensional network structure, and the aerogel includes a copolymer of a first compound selected from an aryl alcohol, an amino-substituted triazine, or a combination thereof, and a second compound, which is an aldehyde.

FIG. 1

1

5

3a
3b } 3

EP 2 497 795 A1

Printed by Jouve, 75001 PARIS (FR)

**Description**

**BACKGROUND**

This disclosure relates to a composition for a clay-aerogel composite, a clay-aerogel composite, and a method of making the same.

An aerogel is a microporous material having a three-dimensional mesh structure with dimensions on a nanometer scale. Aerogels have desirable adiabatic and sound absorption properties, and may be applied to diverse range of applications. In particular, an aerogel may be usefully applied to a cooling device such as a refrigerator or a freezer, and may be used as an adiabatic material in aerospace applications and for building construction.

Aerogels may be catagorized as an inorganic aerogel or an organic aerogel according to the material. An example of an inorganic aerogel is a silica aerogel. An organic aerogel includes an organic linking group therein, and may be more flexible than an inorganic aerogel.

However, an organic aerogel may be broken by an external impact or deformed by shrinkage during drying. Accordingly, there remains a need for an improved organic aerogel with improved properties for insulation applications.

**SUMMARY OF THE INVENTION**

One embodiment provides a clay-aerogel composite having excellent adiabatic properties and strength, including low shrinkage and low density.

Another embodiment provides a composition for a clay-aerogel composite for providing the clay-aerogel composite.

Yet another embodiment provides a clay-aerogel composite with improved properties and low cost.

According to an embodiment, a clay-aerogel composite includes a plurality of clay flakes having a layered structure; and an aerogel on a surface of the clay flakes, wherein the plurality of clay flakes are connected to each other to provide a three-dimensional network structure, and the aerogel includes a copolymer of a first compound selected from an aryl alcohol compound, an amino-substituted triazine, or a combination thereof, and a second compound, which is an aldehyde.

According to another embodiment, a composition for a clay-aerogel composite is provided that includes a plurality of clay flakes, a first compound selected from an aryl alcohol compound, an amino-substituted triazine, and a combination thereof, a second compound, which is an aldehyde, and an aqueous solvent.

According to yet another embodiment, a method of making a clay-aerogel composite includes preparing a composition for a clay-aerogel composite including a plurality of clay flakes, a first compound selected from an aryl alcohol compound, an amino-substituted triazine, and a combination thereof, a second compound, which is an aldehyde, and an aqueous solvent; curing the composition for a clay-aerogel composite to provide a wet gel; and removing the aqueous solvent to make the clay-aerogel composite.

The clay flakes may include a charge on a surface thereof and an opposite a charge on an adjacent surface thereof. In the three-dimensional network structure, a first surface of a first clay flake may contact an edge of a second clay flake and be connected thereto.

The clay flake may include at least one layer selected from a tetrahedral silica ($SiO_4$) layer, an octahedral alumina ($AlO_6$) layer, an octahedral magnesia ($MgO_6$) layer, and a combination thereof.

The clay may include about 70 to 100 layers bonded by a hydrogen bond. The clay flake may include 2 or more layers, and a metal cation selected from an alkali metal, an alkali-earth metal, a transition element, or a combination thereof may be interposed between the layers.

The clay flake may be obtained from clay selected from laponite, hectorite, fluorohectorite, bentonite, and a combination thereof. Also, a clay selected from montmorillonite, kaolinite, vermiculite, saponite, bentonite, attapulgite, sepiolite, pyrophyllite-talc, illite, mica, magadiite, sauconite, kenyaite, thuringite, nontronite, beidellite, volkonskoite, sobockite, stevensite, svinfordite, and a combination thereof may be made into a clay flake by making it thin and treating it to have a charge.

An example of the clay flake may include $Na_{0.7}^{+}[(Si_8Mg_{5.5}Li_{0.3})O_{20}(OH)_4]_{0.7}^{-}$.

The clay flake may have a negative electric charge quantity of about 50 to about 55 millimoles per 100 grams (mmol/100 g) on a first surface and a positive electric charge quantity of about 4 to about 5 mmol/100 g on a side surface.

The clay flake may be treated with a negative charge to neutralize the positive electric charge quantity thereof, and thus may only have a negative charge. Herein, the clay flake may have a negative electric charge quantity of about 50 to about 55 mmol/100 g or more. The clay flake may provide excellent aqueous dispersion and maintain a low dynamic viscosity even when dissolved in water.

The clay flake may have a length of about 25 nanometers (nm) to about 100 nm, a width of about 25 nm to about 100 nm, and a thickness of about 1 nm to about 2 nm, and a ratio, e.g., an aspect ratio, between the length and the thickness may be about 20 to about 100.

The clay flake may be a base having a pH of 9 to 10 when dissolved in water at a concentration of about 1 to about 5 weight percent (wt%) in water, based on a total weight of the clay flake and the water.

The clay flake may have a dynamic viscosity of about $10^4$ centipoise (cP) to about $10^5$ cP at about 20˚C at a shear rate of about 1 per second ($s^{-1}$).

The clay flake may be included in an amount of about 5 to about 40 wt%, based on the total weight of the clay-aerogel composite. The aerogel may be included in an amount of about 60 to about 95 wt%, based on the total weight of the clay-aerogel composite.

In the composition for a clay-aerogel composite, the clay flakes may be included in an amount of about 0.5 to about 5 parts by weight, based on 100 parts by weight of an aqueous solvent. In addition, the first and second compounds may be included in an amount of about 5 to 20 parts by weight, based on 100 parts by weight of an aqueous solvent.

The composition for a clay-aerogel composite may not further include a catalyst. The clay-aerogel composite may further include a support having a plurality of micro-opening areas. The support may include clay flakes and a copolymer of the first and second compounds filled in the micro-opening areas.

The support may include a polymer selected from polyurethane, polyvinylchloride, polycarbonate, polyester, polymethyl(meth)acrylate, polyurea, polyether, polyisocyanurate, and a combination thereof. The polyurea may include a melamine-formaldehyde copolymer.

The clay-aerogel composite may have density of about 0.2 grams per cubic centimeter ($g/cm^3$) or less.

The clay-aerogel composite may have an average micropore size of about 30 nm or less, and about 20 nm or less in another embodiment, and a thermal conductivity of about 15 milliwatts per meter-Kelvin (mW/m · K) or less.

The clay-aerogel composite may have compression pressure of about 0.1 megaPascal (MPa) or more when about 10% compressed.

## BRIEF DESCRIPTION OF THE DRAWINGS

The above and other aspects, advantages and features of this disclosure will become more apparent by describing in further detail exemplary embodiments thereof with reference to the accompanying drawings, in which:

FIG. 1 is a schematic illustration of an embodiment of the structure of the clay-aerogel composite;

FIG. 2 is a schematic illustration of an embodiment of the clay-aerogel composite showing a three-dimensional network formed by a plurality of clay flakes having a sheet structure;

FIG. 3 is a schematic illustration of an embodiment of a clay flake;

FIG. 4 is a graph of pore volume (cubic centimeters per gram-nanometers, $cm^3g^{-1}nm^{-1}$) versus pore diameter (nanometers, nm) that shows a pore distribution of the clay-aerogel composites according to Examples 3 and Example 4 and the aerogel according to Comparative Example 2;

FIG. 5A is a scanning electron micrograph of the clay-aerogel composite according to Example 3;

FIG. 5B is an enlarged view of a portion of the micrograph of FIG. 5A;

FIG. 6A is a scanning electron micrograph of the clay-aerogel composite according to Example 4;

FIG. 6B is an enlarged view of a portion of the micrograph of FIG. 6A;

FIG. 7 is a graph of pore volume (cubic centimeters per gram-nanometers, $cm^3g^{-1}nm^{-1}$) versus pore diameter (nanometers, nm) that shows a pore distribution of the clay-aerogel composites according to Examples 5 to 7;

FIG. 8A is a scanning electron micrograph of the clay-aerogel composite according to Example 10.

FIG. 8B is an enlarged view of a portion of the micrograph of FIG. 8A;

FIG. 9 is a graph of stress (megaPascals, MPa) versus strain (percent, %) that shows compression strength of the clay-aerogel composite according to Examples 8, 9, and 10;

FIGS. 10A and 10B are transmission electron micrographs of the composites of Examples 11A and 11B, respectively;

FIG. 11 is a graph of thermal conductivity (milliWatts per meter-Kelvin, mW/m·K) versus density (grams per cubic centimeter, $g/cm^3$) for the composites of Examples 12A and 12B; and

FIG. 12 is a graph of thermal conductivity (mW/m·K) versus clay concentration (weight/weight of water) for the composites of Examples 13A and 13B.

## DETAILED DESCRIPTION

Exemplary embodiments will hereinafter be disclosed in further detail referring to the following accompanied drawings, in which various embodiments are shown. This invention may, however, be embodied in many different forms, and should not be construed as limited to the embodiments set forth herein. Rather, these embodiments are provided so that this disclosure will be thorough and complete, and will fully convey the scope of the invention to those skilled in the art. Like reference numerals refer to like elements throughout.

It will be understood that when an element is referred to as being "on" another element, it can be directly on the other element or intervening elements may be present therebetween. In contrast, when an element is referred to as being "directly on" another element, there are no intervening elements present. As used herein, the term "and/or" includes any and all combinations of one or more of the associated listed items.

It will be understood that, although the terms "first," "second," "third" etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first "element," "component," "region," "layer," or "section" discussed below could be termed a second element, component, region, layer, or section without departing from the teachings herein.

The terminology used herein is for the purpose of describing particular embodiments only and is not intended to be limiting. As used herein, the singular forms "a," "an" and "the" are intended to include the plural forms as well, unless the context clearly indicates otherwise. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Exemplary embodiments are described herein with reference to illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

"Alkali metal" means a metal of Group 1 of the Periodic Table of the Elements, i.e., lithium, sodium, potassium, rubidium, cesium, and francium.

"Alkaline-earth metal" means a metal of Group 2 of the Periodic Table of the Elements, i.e., beryllium, magnesium, calcium, strontium, barium, and radium.

"Alkyl" means a straight or branched chain, saturated, monovalent hydrocarbon group (e.g., methyl or hexyl).

"Amino" has the general formula $-N(R)_2$, wherein each R is independently hydrogen, C1 to C6 alkyl, or C6 to C12 aryl.

"Aryl" means to a hydrocarbon group having an aromatic ring, and includes monocyclic and polycyclic hydrocarbons wherein the additional ring(s) of the polycyclic hydrocarbon may be aromatic or nonaromatic (e.g., phenyl or napthyl).

"Cycloalkyl" means a monovalent group having one or more saturated rings in which all ring members are carbon (e.g., cycopentyl and cyclohexyl).

"Group" means a group of the Periodic Table of the Elements according to the International Union of Pure and Applied Chemistry ("IUPAC") Group 1-18 group classification system.

"Hydrocarbon" means an organic compound having at least one carbon atom and at least one hydrogen atom, optionally substituted with one or more substituents where indicated.

As used herein, when a definition is not otherwise provided, "substituted" means that a compound or radical is substituted with one or more (e.g., 1 to 4) substituents selected from a C1 to C30 alkyl group, a C2 to C30 alkenyl group, a C2 to C30 alkynyl group, a C6 to C30 aryl group, a C7 to C30 alkylaryl group (e.g., a 4-methylphenylene), a C1 to C4 oxyalkyl group (e.g., a 1-oxoethyl group), a C1 to C30 heteroalkyl group , a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br, or I), a hydroxyl group, a C1 to C15 alkoxy group, a nitro group, a cyano group, an amino group, an azido group, an amidino group, a hydrazine group, a hydrazono group, a carbonyl group, a carbamyl group, a thiol group, a C1 to C30 ester group, a carboxyl group or a salt thereof, a sulfonic acid group or a salt thereof, a phosphoric acid group or a salt thereof, or a combination thereof, instead of a hydrogen, provided that the substituted compound or group's normal valence is not exceeded.

Where reference is made in this application to (dynamic) viscosity, such viscosity has been determined using an AR 2000 rheometer manufactured by TA Instruments.

According to an embodiment, a clay-aerogel composite comprising a plurality of clay flakes and an aerogel on (e.g., surrounding) a surface of the clay flakes is provided. The plurality of clay flakes are connected to each other to provide a three-dimensional network structure, and the aerogel includes a polymer of a first compound, which is an aryl alcohol, an amino-substituted triazine, or a combination thereof, and a second compound, which is an aldehyde.

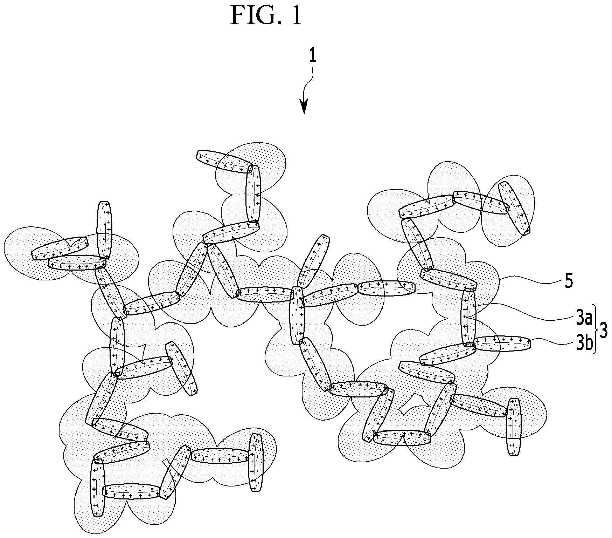

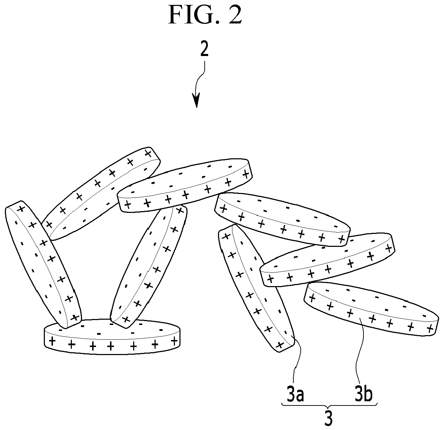

Hereinafter, a clay-aerogel composite according to an embodiment is illustrated referring to FIGS. 1 and 2.

FIG. 1 shows the structure of an embodiment of the clay-aerogel composite. FIG. 2 also shows the structure of an embodiment of the clay-aerogel composite and shows the three-dimensional network structure comprising a plurality of clay flakes 3, each of which has a layered structure.

Referring to FIGS. 1 and 2, the plurality of clay flakes comprises first and second clay flakes 3a and 3b, which are connected to, e.g., are bonded to or contact, one another to form a three-dimensional network structure 2. An aerogel 5 is disposed on and partially or entirely surrounds the surface of the first and second clay flakes 3a and 3b to provide the clay-aerogel composite 1. The clay flakes may be bonded to one another by a bond having substantial ionic character.

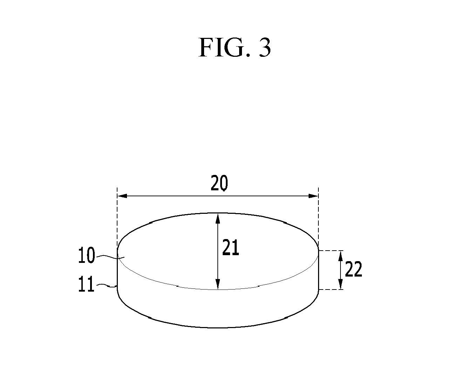

As shown in FIG. 3, a clay flake may have a first surface 10 and an adjacent second (e.g., side, or edge) surface 11. Thus the first surface may correspond to a face of a clay flake, and the second surface may correspond to a side or an edge of the clay flake. Each clay flake may have a charge on the first surface and an opposite charge on the adjacent second surface. For example, the first and second clay flakes 3a and 3b may have a charge on a first surface thereof, and the charge on the first surface may be opposite to a charge on the second surface thereof. Thus, as shown in FIG. 2, the first and second clay flakes 3a and 3b may have a negative (-) charge on the first surfaces of the first and second clay flakes 3a and 3b, and the first and second clay flakes 3a and 3b may have a positive (+) charge on the second surfaces (e.g., side surfaces) of the first and second clay flakes 3a and 3b. Accordingly, the negative (-) charge on the first surface of the first clay flake 3a may be electrostatically attracted to the positive charge of the second surface of the second clay flake 3b, and the first clay flake 3a may contact the clay flake 3b. When the surfaces having opposite charge are combined and contact one another, a plurality of clay flakes may be connected to one another to form a three-dimensional network structure 2. The three-dimensional network structure 2 may have a house-of-cards structure.

In an embodiment, the clay flakes may themselves be gelated, decreasing the time for preparing a clay-aerogel composite 1. In addition, the three-dimensional network structure 2 may include a wet gel, which may be elastic, and the elasticity of the wet gel may decrease any shrinkage that may occur during the manufacturing process of the wet gel or its subsequent treatment. Furthermore, the three-dimensional network structure 2 may improve a mechanical strength and a flame retardancy of the wet gel.

The clay flake may comprise a tetrahedral silica (e.g., $SiO_4$) layer, an octahedral alumina (e.g., $AlO_6$) layer, an octahedral magnesia (e.g., $MgO_6$) layer, or a combination thereof. For example, in an embodiment the clay flake may comprise an aluminosilicate layer, wherein the aluminosilicate layer comprises a first layer comprising tetrahedral silicon (e.g., $SiO_4$), and a second layer comprising octahedral aluminum (e.g., $AlO_6$), and wherein the first and second layers are bonded by a hydrogen bond. The clay flake may also comprise a magnesium silicate layer comprising a first layer comprising tetrahedral silicon (e.g., $SiO_4$) and a second layer comprising octahedral magnesium (e.g., $MgO_6$), wherein the first and second layers are bonded by a hydrogen bond. In another embodiment, the clay flake comprises a magnesium aluminosilicate layer comprising a first layer comprising tetrahedral silicon (e.g., $SiO_4$), and a second layer comprising octahedral aluminum (e.g., $AlO_6$) and octahedral magnesium (e.g., $MgO_6$), wherein the first and second layers are bonded by a hydrogen bond. A combination comprising at least two of the foregoing can be used. In an embodiment, the first layer having the tetrahedral silicon and the second layer having the octahedral aluminum and/or the octahedral magnesium may be combined in a ratio of about 1:2 to about 4:1, specifically about 1:1 to about 2:1, more specifically about 3:2.

In addition, in the tetrahedral silica (e.g., $SiO_4$) layer, the octahedral alumina (e.g., $AlO_6$) layer, and the octahedral magnesia (e.g., $MgO_6$) layer of the clay flake, a portion of the silicon, aluminum, or magnesium, if present, may be substituted with boron (B), phosphorus (P), or a combination thereof. In an embodiment, about 0.01 % to about 50%, specifically about 0.1% to about 10%, more specifically about 1% to about 5% of the silicon, aluminum, or magnesium, if present, is substituted with boron (B) or phosphorus (P).

When the clay flake includes two or more layers, a metal cation selected from an alkali metal, an alkali-earth metal, Group 3 to 12 elements, or a combination thereof may be interposed between the layers. In an embodiment the metal cation is an ion of Li, Na, K, Be, Mg, or Ca. In another embodiment the metal cation is an ion of Group 3 to 11 elements. In an embodiment, the metal cation is a monovalent cation such as an ion of lithium, sodium or potassium, or a divalent cation such as an ion of calcium, or magnesium. In another embodiment the metal cation is a divalent cation. $Ca^{2+}$, $Mg^{2+}$, and $Al^{3+}$ are specifically mentioned. A combination comprising at least two of the foregoing can be used.

The clay flake may be obtained from a clay, and may be derived from a clay selected from laponite, hectorite, fluorohectorite, bentonite, and a combination thereof. In addition, the clay may be selected from montmorillonite, kaolinite, vermiculite, saponite, bentonite, attapulgite, sepiolite, pyrophyllite-talc, illite, mica, magadiite, sauconite, kenyaite, thuringite, nontronite, beidellite, volkonskoite, sobockite, stevensite, svinfordite, and a combination thereof.

The foregoing may be processed to provide a flake-shaped particle, and the flake-shaped particle may be charged to provide the clay flake.

The clay flake may be charged in a cation exchange method, or the like. The cation exchange method is described in "Ion-exchange reactions on clay minerals and cation selective membrane properties as possible mechanisms of economic metal concentration," A. Weiss and G.C. Amstutz, Mineralium Deposita, 1, 60 (1966), the content of which in its entirety is incorporated by reference. Additional details of the cation exchange method can be determined by one of skill in the art without undue experimentation, and thus additional details of the cation exchange method will not be described herein in further detail.

A representative example of the clay flake is $Na_{0.7}^{+}[(Si_8Mg_{5.5}Li_{0.3})O_{20}(OH)_4]_{0.7}^{-}$.

The clay flake may have a negative electric charge quantity of about 5 to about 55 mmol/100 g (e.g, about 4.8 to about 53.1 coulombs per gram (C/g)), specifically about 10 to about 50 mmol/100 g, more specifically about 15 to about 45 mmol/100 g. When the clay flake has the above charge quantity, the individual clay flakes may have strong electrostatic repulsion, and may thus be well-separated in water, any may provide a clay-aerogel composite with a low density, e.g., a density of about 2 to about 1000 $mg/cm^3$, specifically about 5 to about 500 $mg/cm^3$, more specifically about 10 to about 250 $mg/cm^3$.

In addition, the clay flake may have a negative electric specific charge quantity of about 5 to about 55 mmol/100 g, specifically about 40 to about 55 mmol/100 g, more specifically about 50 to about 55 mmol/100 g on the first surface 10 of a the clay flake and a positive electric specific charge quantity of about 4 to about 5 mmol/100 g (e.g., about 3.9 to about 4.8 C/g) on the second surface 11 of the clay flake. When the clay flake has a charge within the foregoing range, the clay flakes may be combined to form a three-dimensional network structure.

The negative charge on the surface of the clay flake may be selected by exchanging the cation, such as $Si^{4+}$, $Al^{3+}$, or the like of the clay flake with another cation having a lower oxidation number, such as $Na^+$ or $Ca^{2+}$. Also, a polarity of the clay flake may be selected by selecting a difference between the negative charge on the first surface of the clay flake and the positive charge on the second surface (e.g., edge) of the clay flake.

An embodiment of the clay flake is shown in FIG. 3. The clay flake may have a layered structure and may have with a length 20, a width 21, and a thickness 22. The length 20 may be about 10 to about 1000 nanometers (nm), specifically about 20 to about 500 nm, more specifically about 25nm to about 100nm. The width 21 may be about 10 to about 1000 nm, specifically about 20 to about 500 nm, more specifically about 25 to 100nm. Also the thickness may be about 1 to about 100 nm, specifically about 1.5 to about 50 nm, more specifically of about 1 to about 2 nm. A ratio of the sum of the length 20 and the width 21 to the thickness 22 may be about 5:1 to about $10^5$:1, specifically about 10:1 to about $10^4$:1, more specifically about 100:1 to about $10^3$:1. Also, a ratio of the length 20 to the thickness 22 may be about 2:1 to about $10^5$:1, specifically about 10:1 to about $10^4$:1, more specifically about 20:1 to about $10^3$:1. In an embodiment, the clay flake has a ratio (i.e., an aspect ratio) of the length 20 to the thickness 22 of about 20:1 to about 100:1. When the clay flake has a size and an aspect ratio within the foregoing range, it may form a three-dimensional network structure having a pore size suitable for an adiabatic material.

The composition for a clay-aerogel composite may have a dynamic viscosity of about $10^4$ to about $10^5$ centipoise (cP) at about 20°C in water at a clay flake concentration of 0.02 grams per milliliter (g/mL) and at a shear rate of about 1 per second ($s^{-1}$).

The clay flake may be a base. When the clay flake is combined with (e.g., dissolved in) water at a concentration of about 1 to about 5 wt%, a pH of the water may be about 8 to about 11, specifically about 9 to about 10, more specifically about 9.4 to about 9.8. When the clay flake has a pH within the foregoing range, it may be suitable as a base catalyst for the polymerization of the first compound and the aldehyde.

The first compound may be a substituted or unsubstituted C6 to C30 aryl alcohol, a substituted or unsubstituted amino-substituted triazine, or a combination thereof. In an embodiment, the first compound is a substituted or unsubstituted C6 to C20 aryl alcohol, an amino-substituted triazine, or a combination thereof. The aryl alcohol may be a phenol (e.g., hydroxy benzene), a resorcinol (e.g., 1,3-dihydroxy benzene), a cresol, a catechol (e.g., 1,2-dihydroxy benzene), or a phloroglucinol (e.g., 1,3,5-trihydroxybenzene). In an embodiment, the aryl alcohol is phenol, resorcinol, cresol, catechol, or phloroglucinol. Representative alkyl substituted aryl alcohols include dimethylphenol, trimethylphenol, isopropylphenol, diisopropylphenol, tert-butylphenol, and di-tert-butylphenol. The substituted or unsubstituted amino-substituted triazine may comprise melamine, hexamethylol melamine, hexamethoxymethyl melamine, hexamethoxyethyl melamine, or a combination thereof. In an embodiment the amino-substituted triazine is melamine.

A combination comprising at least two of the foregoing can be used.

The second compound may be a substituted or unsubstituted C1 to C30 aldehyde of the formula RC(O)H, wherein R is a substituted or unsubstituted C1 to C30 alkyl group, a substituted or unsubstituted C3 to C30 cycloalkyl group, a substituted or unsubstituted C6 to C30 aryl group, or a substituted or unsubstituted C7 to C30 alkylaryl group. In an embodiment, R in RC(O)H is a substituted or unsubstituted C1 to C20 alkyl group, or a substituted or unsubstituted C4 to C20 cycloalkyl group. In another embodiment R in RC(O)H is unsubstituted. In an embodiment, the aldehyde is formaldehyde, acetaldehyde, furfuraldehyde, or a combination thereof.

In general, the polymerization reaction to provide a copolymer of the first compound and the second compound may be performed with a base catalyst or an acid catalyst to decrease a gelation time. However, when the base catalyst is used for the polymerization reaction, gelation time may be undesirably long. Also, when the acid catalyst is used to perform the polymerization reaction, it may decrease gelation time, but when the polymerization reaction is conducted in an aqueous solvent such as water, the product of the polymerization may be unsuitable for commercial use.

According to an embodiment, the clay flake may be a suitable base catalyst and may provide a suitable gelation time without use of an additional catalyst, and the clay flake may also be suitable for use with an aqueous solvent, and thus may decrease a process cost.

The first and second compounds may polymerize on at least one of the first and second surfaces of a clay flake. In an embodiment, the first and second compounds polymerize on the first surface of a clay flake. In another embodiment, the first and second compounds polymerize on the second surface of a clay flake. Since the first and second compounds are polymerized on at least one of the first and second surfaces of the clay flake, a copolymer of the first and second compounds is on a portion of or on an entirety of at least one of the first and second surfaces of the clay flake, and partially or entirely surrounds the clay flake. In an embodiment, the copolymer surrounds about 10 to about 99%, specifically about 20 to about 98%, more specifically about 30 to about 96% of the clay flake. Also, in an embodiment, the copolymer is on about 10 to about 99%, specifically about 20 to about 98%, more specifically about 30 to about 96% of a total surface area of the clay flake. In addition, a copolymer produced from the polymerization may function as a seed for the following polymerization reaction, and may provide a clay-aerogel composite having a suitable pore size, further improving the insulation characteristics of the clay-aerogel composite.

In an embodiment the pore size (e.g., average largest pore dimension) of the clay-aerogel composite is about 0.1 to about 1000 nm, specifically 1 to about 500 nm, more specifically about 10 to about 100 nm.

The composition for a clay-aerogel composite may have a dynamic viscosity of about $10^3$ to about $10^6$ centipoise (cP), specifically about $10^4$ to about $10^5$ cP when determined in water at a clay flake concentration of 0.02 grams per milliliter (g/mL) at 20°C and at a shear rate of 1 per second ($s^{-1}$).

The high dynamic viscosity of the composition may speed up the gelation reaction, decreasing gelation time.

The clay flake may be present in the clay-aerogel composite in an amount of about 1 to about 80 weight percent (wt%), specifically about 5 to about 40 wt%, more specifically about 10 to about 20 wt%, based on the total weight of a clay-aerogel composite. In another embodiment, the clay flake is present in the clay-aerogel composite in an amount of about 10 to about 30 wt%. When the clay flake is included within the foregoing range, it may provide a clay-aerogel composite with a suitably low shrinkage, excellent thermal conductivity, and low density.

The aerogel may comprise the copolymer of the first compound, which is selected from an aryl alcohol, an amino-substituted triazine, and a combination thereof, and a second compound, which is an aldehyde.

The first compound and the second compound may be polymerized and cross-linked to provide a gel. The gel has a hydroxy group on a surface thereof. While not wanting to be bound by theory, it is believed that the hydroxy group provides the gel desirable dissolution properties so that when the gel is contacted (e.g., combined with) a solvent during the gelation, an organic gel may be provided.

Removing the solvent from the copolymer provides an aerogel on the clay flakes, to provide a clay-aerogel composite. Herein, the aerogel may be present in an amount of about 50 to about 99 wt%, specifically about 60 to about 95 wt%, more specifically about 70 to about 90 wt%, based on the total weight of a clay-aerogel composite. When the aerogel is present in the foregoing range, it may reduce a thermal conductivity of the clay-aerogel composite.

The clay-aerogel composite may be fabricated by a method that comprises: combining (e.g., dispersing) a plurality of the clay flakes, the first compound, and the second compound in an aqueous solvent to prepare a composition for the clay-aerogel composite, curing the composition to provide a wet gel, and removing the solvent from the wet gel to provide a clay-aerogel composite. When the composition for the clay-aerogel composite is cured, the first and second compounds may be further polymerized and the copolymer may be cross-linked. Since the polymerization may be performed using the clay flake as a catalyst, an additional (e.g., separate) catalyst may be omitted.

In an embodiment, the composition for the clay-aerogel composite may be prepared by combining the plurality of the clay flakes and an aqueous solvent, and adding the first and second compounds thereto. In an embodiment, the composition for the clay-aerogel composite may be prepared by dissolving the plurality of the clay flakes in an aqueous solvent, and adding the first and second compounds thereto.

The clay flakes may be included in an amount of about 0.5 to about 5 parts by weight, specifically about 1 to about 4 parts by weight, more specifically about 2 to about 3 parts by weight, based on 100 parts by weight of the aqueous solvent. When the clay flakes are used within the foregoing range, the composition for the clay-aerogel composite has sufficiently low dynamic viscosity, and thus may be easily agitated. Also, if the composition for the clay-aerogel composite has too high of a dynamic viscosity, it is difficult to prepare a uniform composition after the agitation, and bubbles may be entrapped in the composition. In an embodiment, the dynamic viscosity of the composition for the clay-aerogel composite is about $10^3$ to about $10^6$ cP, specifically about $10^4$ to about $10^5$ cP, more specifically about $5 \cdot 10^4$ cP at about 20°C at a shear rate of about 1 s$^{-1}$. The foregoing dynamic viscosity may speed up the gelation reaction, decreasing gelation time.

The first and second compounds may be included in an amount of about 5 to about 20 parts by weight, specifically about 5 to about 15 parts by weight, more specifically about 5 to about 10 parts by weight, based a total weight of the aqueous solvent. The first and second compounds may be used in a stoichiometric ratio. Thus, for example, the mole ratio of first compound to the second compound may be determined based upon the number of hydroxyl and amine groups present in the first compound and the number of aldehyde groups present in the second compound. For example, in an embodiment wherein the first compound is resorcinol and the second compound is formaldehyde, the first and the second compound may be used in a mole ratio of about 1:2. In an embodiment, the mole ratio of the first compound to the aldehyde is about 1:1 to about 1:10, specifically about 1:2 to about 1:5, more specifically about 1:3 to about 1:4.

In an embodiment, the aqueous solvent may include water, a mixed solvent of water and an alcohol, or the like. The alcohol may be mixed in an amount of less than about 50 vol%, specifically about 3 to about 30 vol%, and more specifically about 5 to about 20 vol% based on the total volume of the mixed solvent. The alcohol may comprise a primary or a secondary alcohol, such as methanol, n-propanol, isopropanol, n-butanol, sec-butanol, isobutanol, pentanol, hexanol, 2-ethylhexanol, tridecanol, or stearyl alcohol; a cyclic alcohol such as cyclohexanol, or cycloheptanol; an aromatic alcohol such as benzyl alcohol, or 2-phenyl ethanol; a polyhydric alcohol such as ethylene glycol, propylene glycol, 1,3-butanediol, 1,4-butanediol, 1,5-pentanediol, hexamethylene glycol, decamethylene glycol, 1,12-dihydroxyoctadecane, or glycerol; a polymeric polyhydric alcohol such as polyvinyl alcohol; a glycol ether such as methyl glycol, ethyl glycol, butyl glycol, diethylene glycol, triethylene glycol, or tetraethylene glycol; an aminated alcohol such as ethanolamine, propanolamine, isopropanolamine, hexanolamine, diethanolamine, diisopropanolamine, or dimethylethanolamine; or an aminated polyhydric alcohol or glycol ether such as an aminated polyethylene glycol. A combination comprising at least two of the foregoing can be used.

The aqueous solvent may cost less than a non-aqueous organic solvent, decreasing a process cost.

The aqueous solvent may be removed, and the removing of the aqueous solvent may comprise exchanging the aqueous solvent with a second solvent, and drying the wet gel.

The aqueous solvent of the wet gel may be exchanged in a solvent exchange reaction with a second solvent, and the second solvent may comprise any solvent having suitable liquid compatibility with carbon dioxide, without limitation, such as water or an alcohol as disclosed above. The solvent and the second solvent may be the same or different.

Also, when the wet gel is dried under atmospheric pressure or when the solvent used during preparation of the wet gel has sufficient compatibility with carbon dioxide, the solvent exchange process may be omitted.

The wet gel is dried to provide an aerogel. The drying may comprise, for example, supercritical drying, atmospheric pressure drying, lyophilizing (e.g., reduced pressure drying), or a combination thereof.

In an embodiment, the supercritical drying comprises drying with supercritical carbon dioxide. First, liquid carbon dioxide is supplied to a high-pressure reactor to remove the solvent from the wet gel. Then the temperature and pressure of the high-pressure reactor are raised over the threshold points of carbon dioxide, and the carbon dioxide is slowly ejected under reduced pressure to remove it. The supercritical drying may be performed at room temperature, and has good processability and safety. The supercritical drying may be at a temperature and pressure greater than the critical point of $CO_2$. Supercritical drying at about 40°C, about 8 MPa is specifically mentioned.

The atmospheric pressure drying method involves drying the wet gel using a heating process at atmospheric pressure. When the solvent is removed using the atmospheric pressure drying method, the resulting product is called xerogel, which is a type of aerogel.

Lyophilizing (e.g., reduced pressure drying) is a method of removing solvent by freezing the wet gel, including an aqueous solution contained therein, and reducing the pressure to sublimate ice. When the solvent is removed using the lyophilizing (or reduced pressure drying) process, the resulting product is called a cryogel, which is a type of aerogel.

The clay-aerogel composite may have density of about 0.2 g/cm$^3$ or less, specifically about 0.01 to about 0.15 g/cm$^3$, more specifically about 0.05 to about 0.1 g/cm$^3$.

The clay-aerogel composite may have a pore content of about 90% or more, specifically, about 90 to about 98%, more specifically about 92 to about 96%.

The clay-aerogel composite may have an average pore size, e.g., average largest pore diameter, about 5 to about 500 nm, specifically about 8 to about 100 nm, more specifically about 10 to about 50 nm, or about 30 nm or less, or about 20 nm or less, or about 5 to about 60 nm, or about 5 to about 50 nm.

The clay-aerogel composite may have a specific surface area of about 500 to about 1000 square meters per gram ($m^2/g$), specifically more than or equal to 550 $m^2/g$, more specifically more than or equal to 600 $m^2/g$.

Also, the clay-aerogel composite may have a thermal conductivity of about 0.1 to about 30 milliwatts per meter Kelvin (mW/(m·K)), specifically about 1 to about 20 mW/(m·K), more specifically about 20 mW/(m·K) or less, or about 15 mW/(m·K) or less.

The clay-aerogel composite may have compression strength of about 0.01 to about 100 megaPascals (MPa), specifically 0.1 to about 50 MPa, more specifically about 0.1 MPa or more. Herein, the compression strength refers to pressure (i.e., force per unit area) when a sample is 10% compressed.

The clay-aerogel composite may further include a support, and the support may comprise a plurality of cells, e.g., microscopic openings. The cells of the support may be partially or entirely filled with the clay flake and the copolymer of the first compound and the aldehyde.

The support may comprise a polymer selected from polyurethane, polyvinyl chloride, polycarbonate, polyester, polymethyl(meth)acrylate, polyurea, polyether, polyisocyanurate, or a combination thereof. Examples of the polyurea include a melamine-formaldehyde copolymer. The melamine-formaldehyde copolymer has excellent mechanical properties and thus may not be easily broken by an external impact, and has excellent insulation and flame retardant properties. In addition, the melamine-formaldehyde copolymer has excellent chemical resistance and solvent-resistance, and thus may not be decomposed, expanded, or contracted by a solvent. The support may have an expansion or shrinkage rate of about 0.01 to about 10%, specifically about 0.1 to about 5%, or 4% or less, when contacted with a solvent.

The support may be prepared by contacting (e.g., reacting) monomers for a polymer while contacting with a foaming agent. The support may be a commercially available open-cell foam. For example, a polyurethane support may be prepared by contacting (e.g., reacting) a polyol monomer and an isocyanate group-containing monomer while contacting with a foaming agent.

The support comprises a plurality of cells, e.g., microscopic openings. The cells may have an average largest diameter of about 1 to about 1000 micrometers ($\mu$m), specifically about 10 to about 800 $\mu$m, more specifically about 100 to about 600 $\mu$m. In an embodiment, each cell has a size (e.g., largest diameter) of about 300 $\mu$m or less. The cells may have various shapes, and may be circular, a polygonal, a spherical, or a combination thereof, or the like.

The support may comprise a variety of structures, including a two-dimensional hive or three-dimensional network structure. Representative structures for the support include those having a random structure, a structure having a unit which repeats in two dimensions, or a structure having a unit which repeats in three dimensions.

A weight ratio of the support to the clay-aerogel composite may be selected to provide suitable physical properties. For example, when a support is further included, a clay-aerogel composite may be included in an amount of about 70 to about 98 wt%, specifically about 80 to about 97 wt%, more specifically about 85 to about 95 wt%, based on the total weight of the support and the clay-aerogel composite. When the support is included, a content of the support may be reduced and a content of the clay-aerogel composite may be increased to provide excellent thermal conductivity. Accordingly, a support having a low density may be suitable. In particular, a foam having a density of about 0.001 to about 1 gram per cubic centimeter ($g/cm^3$), specifically about 0.005 to about 0.5 $g/cm^3$, more specifically about 0.01 to about 0.1 $g/cm^3$ may be used as a support.

The clay-aerogel composite including the support may be prepared by providing the support having a plurality of cells, contacting the support with the composition for a clay-aerogel composite, e.g., adding the composition for the clay-aerogel composite to the support, and curing the composition for a clay-aerogel composite, and removing a solvent therefrom.

The solvent may be removed by atmospheric pressure drying, supercritical drying, or a combination thereof.

Hereinafter, this disclosure is illustrated in more detail with reference to examples. The examples are exemplary embodiments of this disclosure and shall not be limiting.

Preparation of Aerogel

Example 1

About 10 milliliters (mL) (10 grams, g) of water is poured into a cylindrical glass vial with a diameter of 2.3 centimeters (cm), a height of 7.5 cm, and a capacity of 20 ml, and about 0.1 g of laponite clay powder (Laponite RD, $Na_{0.7}{}^+[(Si_8Mg_{5.5}Li_{0.3})O_{20}(OH)_4]_{0.7}{}^-$, made by Rockwood Additives Ltd.) is slowly added thereto to provide a solution. As the clay is dispersed into water, the opaque solution becomes more transparent, and a dynamic viscosity of the aqueous solution increases.

Separately, about 0.6 g of resorcinol is dissolved in about 0.88 g of a 37 weight percent (wt%) formaldehyde aqueous solution to prepare a transparent resorcinol formaldehyde ("RF") solution. After the clay solution becomes transparent as the clay is well-dispersed in water, it is mixed with the RF solution. The mixture is fervently agitated, to provide a composition for a clay-aerogel composite. The agitated solution is cured in a 70˚C oven for about one day, to obtain a wet gel.

The wet gel is substituted with methanol, which is a solvent having good compatibility with liquid carbon dioxide. Next, liquid carbon dioxide is supplied into a high-pressure reactor to remove the methanol from the wet-gel. When the methanol is completely removed from the wet gel, the temperature and pressure in the reactor are increased over the critical point of carbon dioxide. While maintaining the temperature and pressure, the carbon dioxide is slowly released to reduce the pressure, to prepare a monolithic clay-aerogel composite.

Examples 2 to 4

Monolithic clay-aerogel composites are prepared according to the same method as Example 1, except for using Laponite RD clay ($Na_{0.7}^{+}[(Si_8Mg_{5.5}Li_{0.3})O_{20}(OH)_4]_{0.7}^{-}$) in the amounts of 0.15 g, 0.3 g, and 0.45 g in Examples 2 to 4, respectively.

Comparative Example 1

About 10 mL of acetonitrile is put in a 20 mL glass vial, and 0.72 g of resorcinol, 1.07 mL of a 37 wt% aqueous solution of formaldehyde, and 0.82 mL of a 35% aqueous solution of HCl are added thereto to prepare a 10 percent weight to volume (wt/v%) (i.e.,about 10 g of solids in 100 mL of water) composition for an aerogel. The composition for an aerogel is vigorously agitated at room temperature for 1 minute. Then, the agitated composition is slowly heated for about 10 minutes to 60˚C. To determine if the resulting product has formed a gel, the fluidity at the interface is analyzed. The gel is matured at about 60˚C for about 12 hours.

The obtained wet gel is substituted using acetone, which is a solvent having good compatibility with liquid carbon dioxide. Next, the liquid carbon dioxide is supplied in a high-pressure reactor to remove the acetone from the wet gel. When the acetone in the wet gel is completely removed, the temperature and the pressure of the high-pressure reactor are increased over the critical point. While the temperature and the pressure are maintained, the carbon dioxide is slowly released to reduce pressure, to prepare a monolithic aerogel.

Comparative Example 2

A monolithic aerogel is prepared according to the same method as Comparative Example 1, except for mixing about 0.68 g of resorcinol, about 1.03 mL of formaldehyde, and about 0.056 g of $Na_2CO_3$ in about 10 mL of water.

The clay-aerogel composites according to Examples 1 to 4, and the aerogels according to Comparative Examples 1 and 2, are analyzed to determine their final density, linear shrinkage, specific surface area, pore volume, and average pore size. The results are provided in the following Table 1. The final density is calculated as a ratio of mass (i.e., bulk weight) to volume (i.e., bulk volume). The linear shrinkage is calculated according to the following Equation 1. The specific surface area is measured by using a BET surface analyzer. These properties are determined according to "Hydrophobic and Physical Properties of the Two Step Processed Ambient Pressure Dried Silica Aerogels with Various Exchanging Solvents," A. Parvathy Rao, A. Venkateswara Rao, and G. M. Pajonk, Journal of Sol-Gel Science and Technology 36, 285-292, 2005, the content of which in its entirety is herein incorporated by reference.

Equation 1

[(length of one edge of wet gel or composite before treatment– length of one edge of aerogel or composite after treatment/ (length of one edge of wet gel before treatment)]X100

Table 1

| | Final density (g/cm$^3$) | Linear shrinkage (%) | Specific surface area (m$^2$/g) | Clay amount (relative to the total amount of clay-aerogel composite, wt%) |
|---|---|---|---|---|
| Comparative Example 1 | 0.150 | 15.1 | 506.9 | - |
| Comparative Example 2 | 0.144 | 24.5 | 671.6 | - |
| Example 1 | 0.107 | 6.1 | 637.2 | 9.7 |
| Example 2 | 0.116 | 6.1 | 681.5 | 13.9 |
| Example 3 | 0.167 | 12.2 | 731.4 | 24.5 |
| Example 4 | 0.221 | 18.4 | 734.9 | 32.7 |

Referring to Table 1, the clay-aerogel composites according to Examples 1 to 4 had low density and linear shrinkage and high specific surface area.

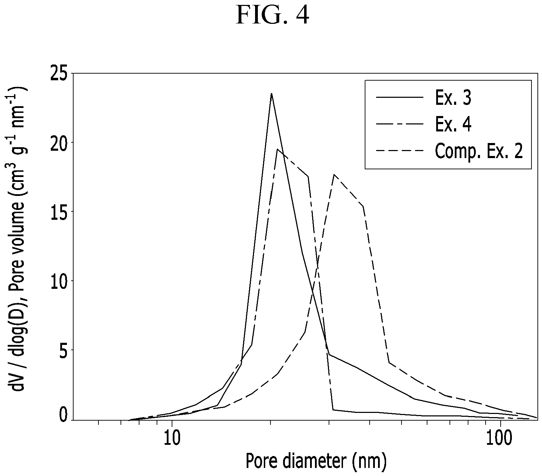

The pore size distribution of the clay-aerogel composites according to Examples 3 and 4 and the aerogel according to Comparative Example 2 are measured using a BET surface analyzer. The results are provided in FIG. 4. As shown in FIG. 4, the aerogel of Comparative Example 2 has an average pore size of about 32 nm. However, the clay-aerogel composite according to Examples 3 and 4 have an average pore size of about 21 nm. Accordingly, the clay-aerogel composites according to Examples 3 and 4 have a well-developed pore distribution.

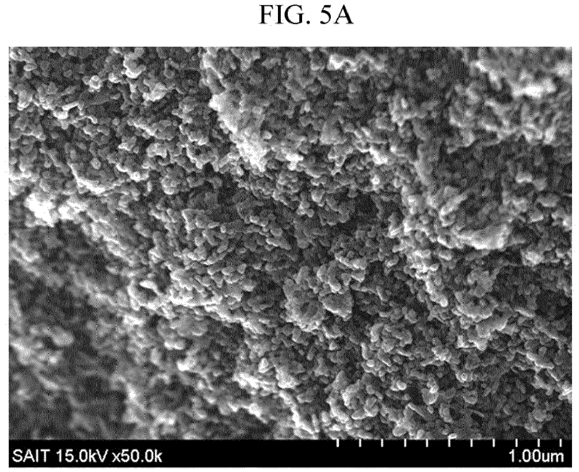

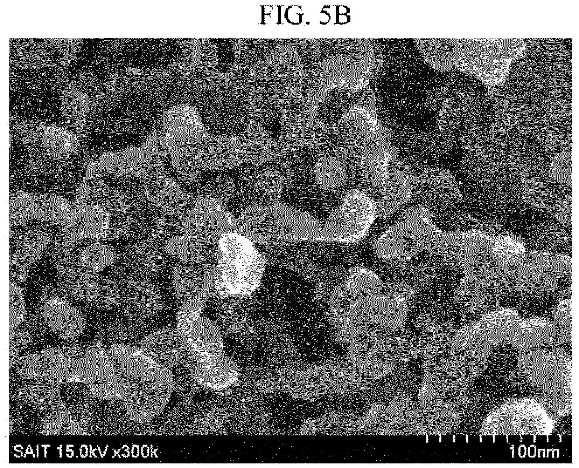

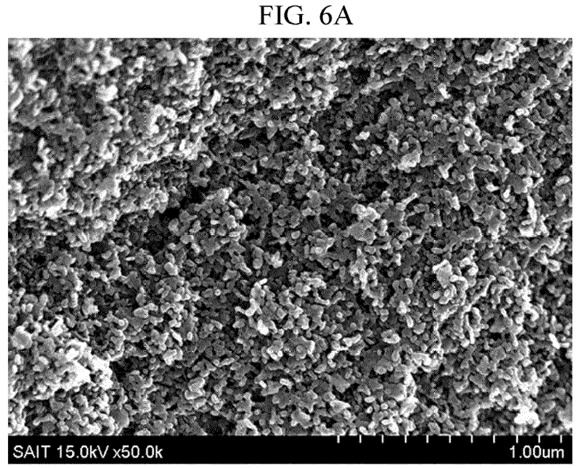

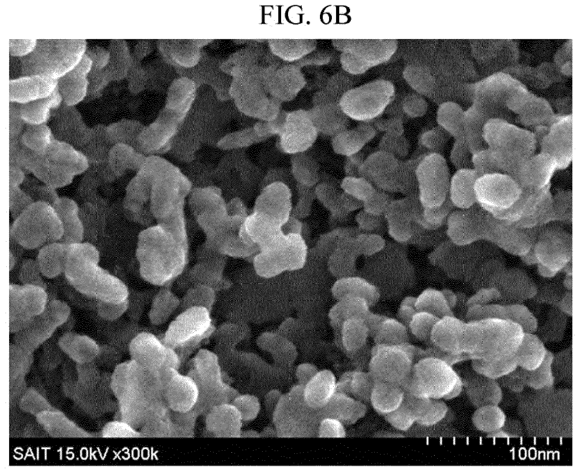

In addition, FIG. 5A shows a scanning electron micrograph of the clay-aerogel composite according to Example 3. FIG. 5B provides an enlarged view thereof. FIG. 6A shows the scanning electron micrograph of the clay-aerogel composite according to Example 4, and FIG. 6B provides an enlarged view thereof.

Examples 5 to 7

Each clay-aerogel composite according to Examples 5 to 7 is prepared according to the same method as Example 1, except for using about 2 parts by weight of clay (Laponite RD clay, Na$_{0.7}$$^+$[(Si$_8$Mg$_{5.5}$Li$_{0.3}$)O$_{20}$(OH)$_4$]$_{0.7}$$^-$), based on 100 parts by weight of water, and adjusting the solid content amount of resorcinol and formaldehyde as provided in the following Table 2. Herein, the resorcinol and formaldehyde are used in a mole ratio of 1:2. The clay-aerogel composites according to Examples 5 to 7 are measured to determine their final density, linear shrinkage, specific surface area, pore volume, and average pore size. The results are provided in the following Table 2. The final density is calculated as a ratio of mass (i.e., bulk weight) to volume (i.e., bulk volume). The linear shrinkage is calculated according to Equation 1. The specific surface area, pore volume, and average pore size are measured using a BET surface analyzer.

Table 2

| | Solid content (wt%) | Final density (g/cm$^3$) | Linear shrinkage (%) | Specific surface area (m$^2$/g) | Pore volume (cm$^3$/g) | Average Pore size (nm) | Clay amount (relative to the total amount of clay-aerogel composite, wt%) |
|---|---|---|---|---|---|---|---|
| Example 5 | 12 | 0.162 | 10.2 | 687.0 | 3.295 | 26.1 | 15.0 |
| Example 6 | 14 | 0.186 | 12.2 | 652.1 | 3.654 | 26.8 | 13.1 |
| Example 7 | 16 | 0.187 | 10.2 | 502.5 | 4.145 | 27.2 | 11.5 |

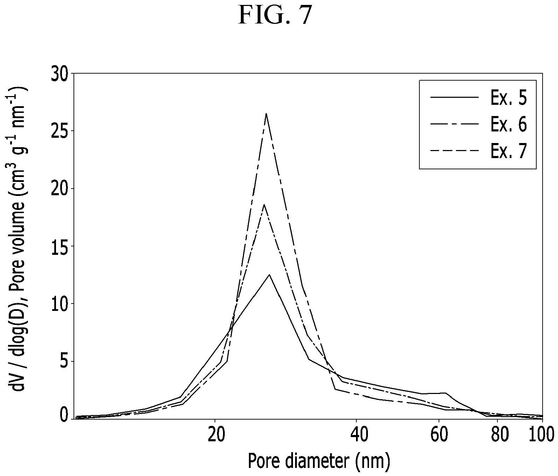

FIG. 7 shows the pore distribution of the clay-aerogel composites according to Examples 5 to 7.

Referring to the results of Table 2 and FIG. 7, the clay-aerogel composites according to Examples 5 to 7 have a low density and low linear shrinkage but a high specific surface area, and include many pores with a size of about 30 nm or less. Also, the results show that the pore sizes are well distributed. The average pore size of the clay-aerogel composites according to Examples 5 to 7 are about 25 nm.

Examples 8 and 9

A composition for a clay-aerogel composite according to Example 8 is prepared by mixing about 28.6 g resorcinol, about 41.9 g of formaldehyde, and about 3 g of Laponite RD clay ($Na_{0.7}^+[(Si_8Mg_{5.5}Li_{0.3})O_{20}(OH)_4]_{0.7}^-$) in about 600 g of water and vigorously agitating the combination.

A composition for a clay-aerogel composite according to Example 9 is prepared according to the same method as Example 8, except for using about 6 g of Laponite RD clay ($Na_{0.7}^+[(Si_8Mg_{5.5}Li_{0.3})O_{20}(OH)_4]_{0.7}^-$).

The compositions for a clay-aerogel composite of Examples 8 and 9 are cured in a 70°C oven, to obtain a wet gel. The wet gel is substituted with methanol, which a solvent having good compatibility with liquid carbon dioxide. Next, the high pressure reactor is supplied with liquid carbon dioxide to remove methanol therein. When the methanol is completely removed from the wet gel, the temperature and the pressure in the reactor are increased over the critical point of carbon dioxide. While the temperature and the pressure are maintained, the carbon dioxide is slowly removed to reduce the pressure in the reactor, preparing a clay-aerogel composite.

The clay-aerogel composites according to Examples 8 and 9 are analyzed to determine their final density, linear shrinkage, specific surface area, and thermal conductivity. The results are provided in the following Table 3. The shrinkage is calculated according to Equation 1. The specific surface area is measured in a BET method. The thermal conductivity is measured using a heat flow meter ("HFM").

Example 10

A composition for a clay-aerogel composite according to Example 10 is prepared by mixing about 26.0 g of resorcinol, about 38 g of formaldehyde, and about 3.6 g of Laponite RD clay ($Na_{0.7}^+[(Si_8Mg_{5.5}Li_{0.3})O_{20}(OH)_4]_{0.7}^-$) in about 360 g of water and vigorously agitating the mixture.

The composition for a clay-aerogel composite is impregnated in a BASF-UF (BASF Co. Ltd.) support.

The impregnated composition is cured in a 60°C oven, to obtain a wet gel. The wet gel is substituted with methanol, which is a solvent having good compatibility with liquid carbon dioxide. Next, the high pressure reactor is supplied with liquid carbon dioxide to remove methanol from the wet gel. When the methanol is completely removed from the wet gel, the temperature and the pressure in the reactor are increased over the critical point of the liquid carbon dioxide. While maintaining the temperature and the pressure in the reactor, the liquid carbon dioxide is slowly released to reduce the pressure in the reactor, preparing a clay-aerogel composite.

Table 3

|  | Final density ($g/cm^3$) | Linear shrinkage (%) | Specific surface area ($m^2/g$) | Thermal conductivity ($mW/m \cdot K$) | Clay amount (relative to the total amount of clay-aerogel composite, wt%) |
|---|---|---|---|---|---|
| Example 8 | 0.1 | 10.3 | 601.3 | 13.59 | 6.4 |
| Example 9 | 0.115 | 10.3 | 593.8 | 14.90 | 12.0 |
| Example 10 | 0.104 | 2.3 | 649.9 | 13.46 | 7.8 |

Referring to Table 3, the clay-aerogel composites according to Examples 8 to 10 have a low density and have a low linear shrinkage, and have a high specific surface area and low thermal conductivity.

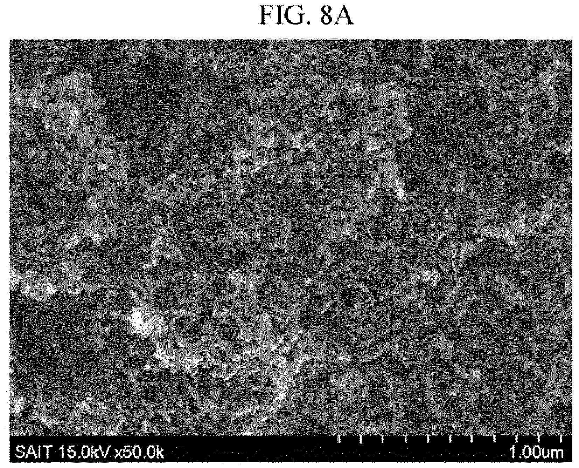

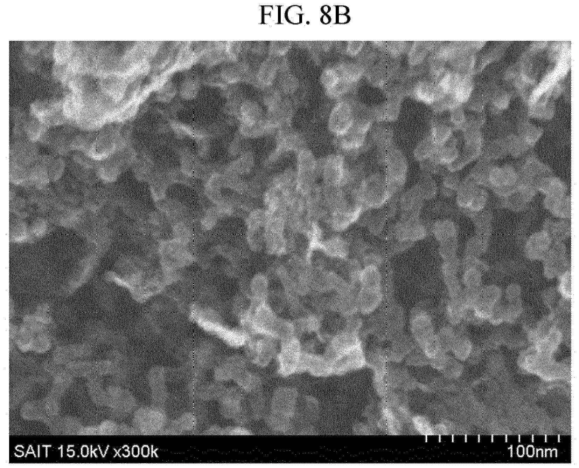

FIG. 8A shows the scanning electron micrograph of the clay-aerogel composite according to Example 10. FIG. 8B shows an enlarged view thereof. As shown in FIGS. 8A and 8B, the clay-aerogel composite according to Example 10 has a well-developed pore structure.

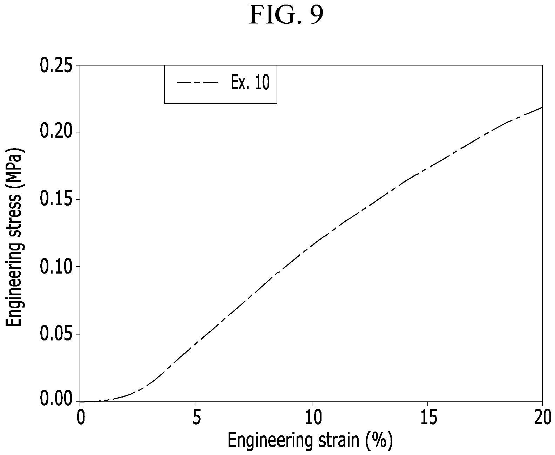

The mechanical strength of the clay-aerogel composites are measured using a universal testing machine ("UTM") having with a jig for compression. The sample size is 3 cm by 3 cm by 1.5 cm. In the analysis, each sample of the clay-aerogel composite is compressed at a speed of 10 mm/min. FIG. 9 shows compression strength of the clay-aerogel composite according to Example 10. The compression strength is measured as a stress value when the stress-strain curve is changed by 10%. Referring to FIG. 9, the clay-aerogel composite according to Example 10 has excellent

EP 2 497 795 A1

compression strength.

Example 11

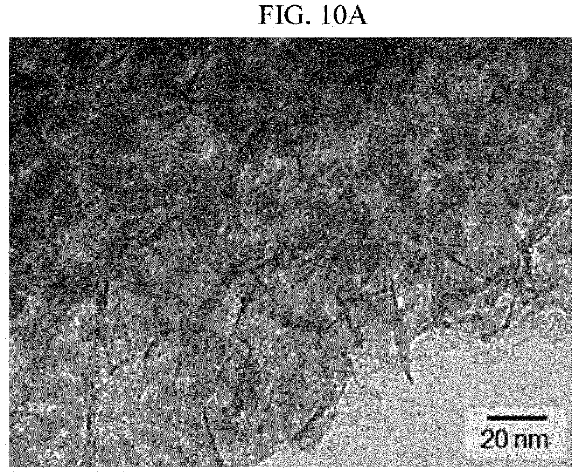

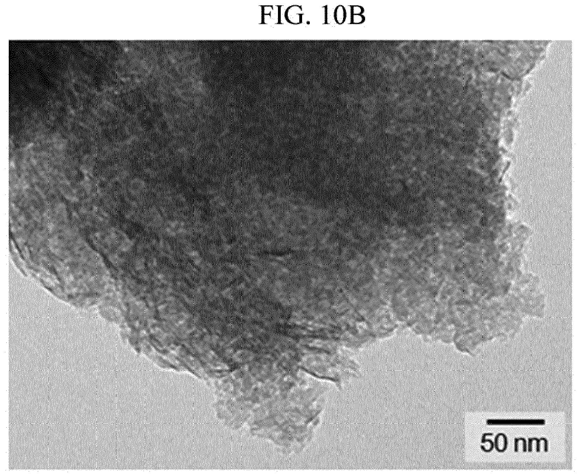

Monolithic clay-aerogel composites are prepared according to the same method as Example 1, except for using either 1 wt% Laponite RD clay ((Rockwood Clay Additives Inc., Example 11A) or 1 wt% Laponite RDS ((Rockwood Clay Additives Inc., Example 11 B). The clay-aerogel composites are analyzed by transmission electron microscopy, the results of which are shown in FIGS. 10A and 10B. The transmission electron micrographs of FIGS. 10A and 10B show the exfoliated clays in the organic matrix, and show that the platelets of the clay are homogeneously dispersed.

Example 12

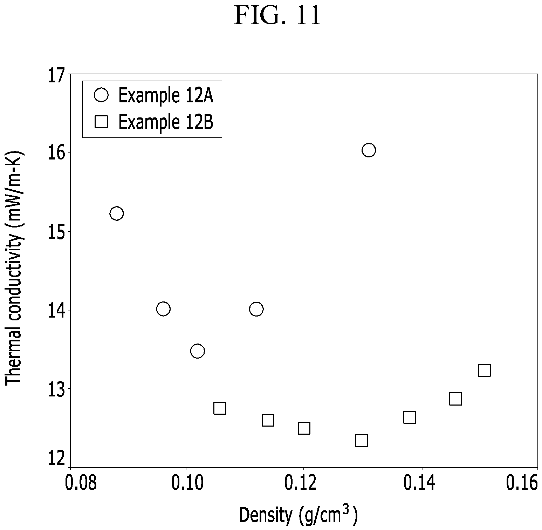

Clay-aerogel composites are prepared according to the same method as Example 1, except for using either 1 wt% Laponite RD clay ((Rockwood Clay Additives Inc., Example 12A) or 1 wt% Laponite RDS clay ((Rockwood Clay Additives Inc., Example 12B), while varying the resorcinol-formaldehyde content to provide composites having various densities, as shown in FIG. 11. The minimum thermal conductivity is provided at a density of 0.1 $g/cm^3$ for the composites comprising Laponite RD clay, and at about 0.13 $g/cm^3$ for the composites comprising Laponite RDS clay. Because the density at the thermal conductivity minimum of these materials is less than the density at the thermal conductivity minimum of materials prepared using commercially available resorcinol-formaldehyde aerogels (e.g., 0.15 to 2 $g/cm^3$), or the density at the thermal conductivity minimum of polyurea aerogels or poly dicyclo-pentadiene aerogels, 0.2 $g/cm^3$ and 0.21 $g/cm^3$, respectively, it is understood that the added clay reduced shrinkage and maintained the nanoporous structure during the manufacture of the composites.

Example 13

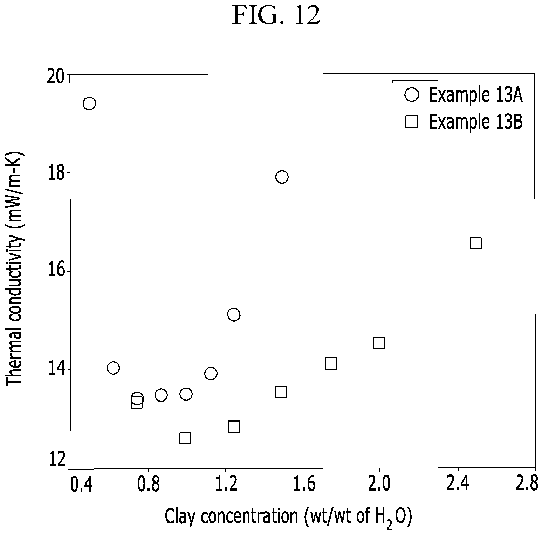

Clay-aerogel composites are prepared according to the same method as Example 1, except for using either Laponite RD clay (Rockwood Clay Additives Inc., Example 13A) or Laponite RDS clay (Rockwood Clay Additives Inc., Example 13B), and varying the clay content. As shown in FIG. 12, the thermal conductivity of the composites of Example 13A provided a minimum conductivity at about 0.9 $g/cm^3$, and the composites of Example 13B provided a minimum conductivity at about 0.9 $g/cm^3$.

While this disclosure has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

**Claims**

1.  A clay-aerogel composite, comprising:

   a plurality of clay flakes having a layered structure; and
   an aerogel on a surface of the clay flakes,
   wherein the plurality of clay flakes are connected to each other to provide a three-dimensional network structure, and
   the aerogel comprises a copolymer of
   a first compound selected from an aryl alcohol, an amino-substituted triazine, and a combination thereof, and
   a second compound, which is an aldehyde.

2.  The clay-aerogel composite of claim 1, wherein the clay flakes have a charge on a surface of each clay flake, and an opposite charge on an adjacent surface thereof.

3.  The clay-aerogel composite of claim 2, wherein a first surface of a first clay flake contacts and is connected to an adjacent second surface of a second clay flake to provide the three-dimensional network structure.

4.  The clay-aerogel composite of any of claims 1-3, wherein a clay flake of the plurality of clay flakes comprises at least one layer selected from a tetrahedral silica layer, an octahedral alumina layer, an octahedral magnesia layer, and a combination thereof.

5. The clay-aerogel composite of any of claims 1-3, wherein the clay flakes comprise a layer derived from a clay selected from hectorite, fluorohectorite, bentonite, montmorillonite, kaolinite, vermiculite, saponite, attapulgite, sepiolite, pyrophyllite-talc, illite, mica, magadiite, sauconite, kenyaite, thuringite, nontronite, beidellite, volkonskoite, sobockite, stevensite, svinfordite, and a combination thereof.

6. The clay-aerogel composite of claim 5, wherein the clay flakes further comprise a cation interposed between adjacent layers.

7. The clay-aerogel composite of any of claims 1-3, wherein the plurality of clay flakes comprise a clay flake selected from a first clay flake derived from a clay selected from hectorite, fluorohectorite, bentonite, and a combination thereof, a second clay-flake derived from a clay selected from montmorillonite, hectorite, fluorohectorite, kaolinite, vermiculite, saponite, bentonite, attapulgite, sepiolite, pyrophyllite-talc, illite, mica, magadiite, sauconite, kenyaite, thuringite, nontronite, beidellite, volkonskoite, sobockite, stevensite, svinfordite, and a combination thereof, and a combination thereof.

8. The clay-aerogel composite of any of claims 1-3, wherein the clay flake is $Na_{0.7}{}^+[(Si_8Mg_{5.5}Li_{0.3})O_{20}(OH)_4]_{0.7}{}^-$.

9. The clay-aerogel composite of any of claims 1-8, wherein the clay is a base having pH of about 9 to about 10 when dissolved in water in a concentration of about 1 to 5 weight percent, based on a total weight of the clay flake and the water.

10. The clay-aerogel composite of any of claims 1-9, wherein the clay-aerogel composite further comprises a support, the support comprising a plurality of cells.

11. The clay-aerogel composite of claim 10, wherein the support comprises polyurethane, polyvinylchloride, polycarbonate, polyester, polymethyl(meth)acrylate, polyurea, polyether, polyisocyanurate, or a combination thereof.

12. A composition for a clay-aerogel composite of any of claims 1-11, the composition comprising:

> a plurality of clay flakes;
> a first compound selected from an aryl alcohol, an amino-substituted triazine, and a combination thereof;
> a second compound, which is an aldehyde; and
> an aqueous solvent.

13. The composition of claim 12, wherein the clay flakes are present in an amount of about 0.5 to 5 parts by weight, based on 100 parts by weight of the aqueous solvent, and/or wherein the first and second compounds are present in an amount of about 5 to 20 parts by weight, based on 100 parts by weight of the aqueous solvent.

14. The composition of claim 12 or 13, which excludes an additional catalyst.

15. A method of making a clay-aerogel composite, the method comprising:

> preparing a composition for a clay-aerogel composite comprising
> a plurality of clay flakes,
> a first compound selected from an aryl alcohol compound, an amino-substituted triazine, and a combination thereof,
> a second compound, which is an aldehyde, and
> an aqueous solvent;
> curing the composition for a clay-aerogel composite to provide a wet gel; and
> removing the aqueous solvent to make the clay-aerogel composite.

FIG. 1

EP 2 497 795 A1

FIG. 2

## FIG. 3

FIG. 4

FIG. 5A

SAIT 15.0kV x50.0k                                    1.00um

FIG. 5B

SAIT 15.0kV x300k                                    100nm

FIG. 6A

SAIT 15.0kV x50.0k                1.00um

FIG. 6B

SAIT 15.0kV x300k                    100nm

FIG. 7

## FIG. 8A

SAIT 15.0kV x50.0k        1.00um

FIG. 8B

SAIT 15.0kV x300k                    100nm

FIG. 9

## FIG. 10A

FIG. 10B

50 nm

FIG. 11

FIG. 12

Europäisches
Patentamt

European
Patent Office

Office européen
des brevets

# EUROPEAN SEARCH REPORT

Application Number

EP 12 15 8797

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 656 195 A (MIELKE MANFRED [DE] ET AL) 12 August 1997 (1997-08-12) * claims 1,5 * ----- | 1-15 | INV. C08K3/34 C08K7/00 B22C1/16 |
| X | EP 1 852 197 A1 (DEUTSCH ZENTR LUFT & RAUMFAHRT [DE]) 7 November 2007 (2007-11-07) * claims 1-9 * ----- | 1-15 | |

TECHNICAL FIELDS
SEARCHED      (IPC)

C08K
B22C

The present search report has been drawn up for all claims

| Place of search | Date of completion of the search | Examiner |
|---|---|---|
| The Hague | 29 June 2012 | Siemens, Thomas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 12 15 8797

This annex lists the patent family members relating to the patent documents cited in the above-mentioned European search report.
The members are as contained in the European Patent Office EDP file on
The European Patent Office is in no way liable for these particulars which are merely given for the purpose of information.

29-06-2012

| Patent document cited in search report | | Publication date | Patent family member(s) | | Publication date |
|---|---|---|---|---|---|
| US 5656195 | A | 12-08-1997 | DE | 4409309 A1 | 21-09-1995 |
| | | | EP | 0672635 A1 | 20-09-1995 |
| | | | JP | 7267756 A | 17-10-1995 |
| | | | US | 5656195 A | 12-08-1997 |
| EP 1852197 | A1 | 07-11-2007 | AT | 525153 T | 15-10-2011 |
| | | | DE | 102006021151 A1 | 08-11-2007 |
| | | | EP | 1852197 A1 | 07-11-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. PARVATHY RAO ; A. VENKATESWARA RAO ; G. M. PAJONK.** Hydrophobic and Physical Properties of the Two Step Processed Ambient Pressure Dried Silica Aerogels with Various Exchanging Solvents. *Journal of Sol-Gel Science and Technology,* 2005, vol. 36, 285-292